# EUROPEAN PATENT SPECIFICATION

(11) **EP 4 480 773 B1**
(45) Date of publication and mention of the grant of the patent: **07.10.2026**
(21) Application number: 22927068.1
(22) Date of filing: 17.02.2022
(51) Int. Cl.: B60W 10/06, B60K 6/387, B60K 6/442, B60W 10/08, B60W 10/26, B60W 20/10, B60W 20/20, B60W 50/08, B60W 20/13, B60W 20/40, B60W 20/11

(54) **HYBRID VEHICLE**
HYBRIDFAHRZEUG
VÉHICULE HYBRIDE

(43) Date of publication of application: 25.12.2024
(73) Proprietor: Mitsubishi Jidosha Kogyo Kabushiki Kaisha, Tokyo 108-8410 (JP)
(72) Inventor: MURASE Masahiro, Tokyo 108-8410 (JP)
(74) Representative: Vossius & Partner Patentanwälte Rechtsanwälte mbB
(86) International application number: PCT/JP2022/006348
(87) International publication number: WO 2023/157166

(56) References cited:
- WO-A1-2019/188362
- WO-A1-2022/024373
- JP-A- 2017 165 373
- JP-A- 2017 165 373
- JP-A- 2018 008 544
- JP-A- 2018 008 544
- JP-A- 2020 121 643
- US-A1- 2005 061 563

## Description

### [Technical Field]

The present invention relates to a hybrid vehicle provided with an engine and a motor.

### [Background Technique]

In a conventional hybrid vehicle provided with an engine and a motor, one of multiple running modes is selected in accordance with a running state, and the operating states of the engine and the motor are controlled in accordance with the selected running mode. Examples of the running modes include: an EV (Electric Vehicle) running mode in which the vehicle runs only with driving force of a motor; and a hybrid running mode in which the vehicle runs using the engine and the motor in combination. The hybrid running mode includes: a parallel running mode in which the vehicle runs by transmitting the driving force of the engine and the motor to the driving wheels; and a series running mode in which the vehicle runs by transmitting the driving force of the motor to the driving wheels while causing a generator to generate electric power using the driving force of the engine (for example, refer to Patent Document 1). Patent Document 2 relates to a switching control between an electric driving mode and a hybrid driving mode in a hybrid vehicle.

### [Prior Art Reference]

### [Patent Document]

[Patent Document 1] JP 2018-100013A
[Patent Document 2] JP 2018-008544 A

### [Summary Of Invention]

### [Problems To Be Solved By Invention]

The technique described in Patent Document 1 determines whether or not a battery voltage declines to a lower limit voltage as a requirement for switching the running mode from the EV running mode to the hybrid running mode. This control can suppress the consumption of the battery electric power or can charge the battery with electric power by starting the engine when the amount of the battery electric power comes to be small, for example. On the other hand, a decline in the battery voltage brings down a battery upper limit output and a driving torque of the vehicle, so that a torque fluctuation between before and after the start of the engine increases, which may degrade a running feeling.

Furthermore, when the driving torque of the vehicle decreases, a driver of the vehicle may depresses an accelerator pedal strongly to start the engine. In this case, a driver-demanded torque increases rapidly and the driving torque of the vehicle becomes excessively large, so that the running feeling may be further degraded. In addition, since rapid increment in the torque may strongly accelerate the vehicle, the driver has to rapidly ease the depression of the accelerator pedal immediately after the start of the engine, and therefore hardly enjoys preferable usability.

With the foregoing problems in view, one of the objects of the present invention to provide a hybrid vehicle that can enhance the running feeling and the usability (user-friendliness, operability). In addition to this object, an influence and an effect which are derived from each configuration of an embodiment to carry out the invention to be described below and which conventional technique does not attain are regarded as other objects of the present disclosure.

### [Means To Solve Problems of Invention]

The disclosed hybrid vehicle can be implemented as an embodiment or application example disclosed below, and solves at least a part of the above problems.

The invention is specified by the independent claim. Preferred embodiments are defined in the dependent claim. In the following description, although numerous features may be designated as optional, it is nevertheless acknowledged that all features comprised in the independent claim are not to be read as optional.

### [Effect of Invention]

The disclosed hybrid vehicle can suppress fluctuation of the driving torque of the vehicle by performing control that starts the engine if the condition A is satisfied when the motor is operating but the engine is not operating, and can consequently enhance the running feeling. In addition, since the engine can be started without depressing the accelerator pedal by the driver, excessive increase in the driving torque at the start of the engine can be avoided and consequently the usability (user-friendliness, operability) can be enhanced.

### [Brief Description of Drawings]

[FIG. 1] FIG. 1 is a block diagram showing a configuration of a hybrid vehicle.
[FIG. 2] FIG. 2 is an example of a flowchart of control related to determination of starting an engine.
[FIG. 3] FIG. 3 is an example of a flowchart of control related to determination of selecting a running mode and determination of starting the engine.
[FIG. 4] FIGs. 4A-4F are time charts illustrating control action.

### [Embodiment To Carry Our Invention]

The hybrid vehicle disclosed herein can be carried out according to the following embodiment.

### [Embodiment(s)]

### 1. Configuration of Device

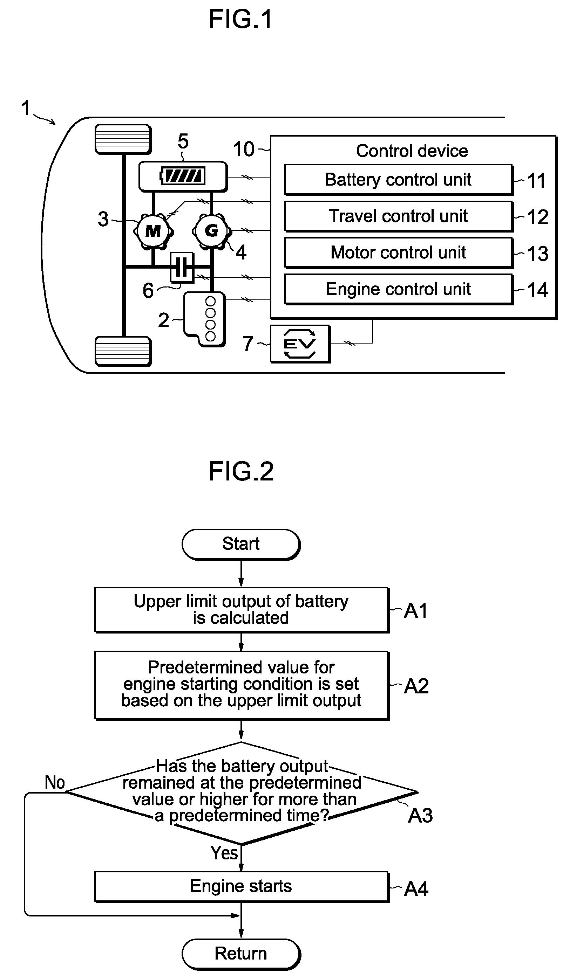

FIG. 1 is a block diagram illustrating a configuration of a hybrid vehicle 1 according to an embodiment. The hybrid vehicle 1 (also simply referred to as vehicle 1) is a hybrid vehicle (HEV: Hybrid Electric Vehicle) or plug-in hybrid vehicle (PHEV: Plug-in Hybrid Electric Vehicle) in which an engine 2 and a motor 3 serving as driving sources, a generator 4 serving as a power generation device, and a battery 5 serving as a power storage device are mounted. A plug-in hybrid vehicle means a hybrid vehicle capable of externally charging the battery 5 with electric power or of external power supply from the battery 5. The plug-in hybrid vehicle is provided with a charging port (inlet) into which a charging cable supplied with electric power from an external charging facility is inserted or a socket (outlet) for external power supply.

The engine 2 is exemplified by an internal combustion engine such as a gasoline engine or a diesel engine. To the drive shaft of the engine 2, the generator 4 is coupled. The generator 4 is an electric-energy-generating equipment (motor generator, dynamo-electric machine) having a function of driving the engine 2 with the electric power of the battery 5 and a function of generating electric power using the driving force of the engine 2. The electric power generated by the generator 4 is used for driving the motor 3 and charging the battery 5. A non-illustrated transmission mechanism may be interposed on a power transmission path connecting the engine 2 and the generator 4 to each other.

The motor 3 is a kinetic-energy-generating equipment (motor-generator, dynamo-electric machine) having a function for running the vehicle 1 using the electric power of the battery 5 or electric power generated by the generator 4, and a function for charging the battery 5 with electric power generated by regenerative power generation by itself. The battery 5 is a rechargeable battery (secondary battery) such as a lithium-ion secondary battery or a nickel metal hydride battery. The drive shaft of the motor 3 is coupled to the drive wheels of the vehicle 1. A non-illustrated transmission mechanism may be interposed on a power transmission path connecting the motor 3 and the driving shaft to each other.

A clutch 6 is interposed on a power transmission path connecting the engine 2 and the motor 3 to each other. The engine 2 is connected to the drive wheels via the clutch 6, and the motor 3 is arranged on the side of the driving wheels from the clutch 6. The generator 4 is connected on the side of the engine 2 from the clutch 6. When the clutch 6 is disengaged (released), the engine 2 and the generator 4 come into a disconnected state from the drive wheels, and the motor 3 comes into a connected state to the drive wheels. Therefore, by operating only the motor 3, for example, an "EV running mode (pure-electric running mode)" is achieved. In addition to this, a "series-running mode" is achieved by additionally activating the engine 2 to cause the generator 4 to generate electric power.

On the other hand, when the clutch 6 is coupled (engaged), three components of the engine 2, the motor 3, and the generator 4 are connected to the drive wheels. Therefore, for example, by operating only the engine 2, an "engine running mode (pure-engine running mode)" is achieved. In addition to this, by driving the motor 3 and the generator 4, a "parallel running mode" is achieved. Both the series running mode and the parallel running mode are sub-modes included in the "hybrid running mode", and at least one of these sub-modes can be implemented. Among the above running modes, one running mode is selected in accordance with the running state of the vehicle 1 in the control device 10.

This vehicle 1 is provided with an EV priority mode switch 7. The EV priority mode switch 7 is a button or a lever for changing a requirement for switching the running mode from the EV running mode to the hybrid running mode (series running mode or parallel running mode), and is flicked on/off by the driver. The information of the operating position of the EV priority mode switch 7 is transmitted to the control device 10. In the present embodiment, when the EV priority mode switch 7 is flicked to the on-position, the control state of the running mode is set to the "EV priority mode". When the EV priority mode switch 7 is flicked to the off-position, the state of the vehicle 1 is set to the "normal mode".

The EV priority mode is a mode in which the EV running mode is preferentially performed over the hybrid running mode as compared with in the normal mode. In other words, the EV priority mode is a mode in which the engine 2 is less likely to be started than the normal mode. Therefore, focusing on a requirement (engine starting requirement) for starting the engine 2 when the motor 3 is operating but the engine 2 is not operating, the engine starting requirement in the EV priority mode is stricter in contrast to the engine starting requirement in the normal mode. Conversely, the normal mode is a mode in which the EV running mode is less preferentially performed than the EV priority mode. In other words, the normal mode is a mode in which engine 2 is more likely to be started than the EV priority mode. Therefore, the engine starting requirement in the normal mode is looser in contrast to the engine starting requirement in EV priority mode (lenient determination for the engine starting is made in the normal mode).

### 2. Configuration of Control

The respective operating states of the engine 2, the motor 3, the generator 4, the battery 5, the clutch 6 are controlled by the control device 10. The control device 10 is a computer (ECU: Electronic Control Unit) that selects one from multiple running modes in accordance with the running state of the vehicle 1 and performs control suitable for the selected running mode. The control device 10 includes a processor (arithmetic processing device) and a memory (storing device). The content of the control (control program) performed by the control device 10 is stored in the memory, and is executed by being appropriately read by the processor.

In the control device 10, a battery control unit 11, a running control unit 12, a motor control unit 13, and an engine control unit 14 are provided. These elements represent the functions of the control device 10 being classified for convenience, and can be achieved by software (program) or hardware (electronic controlling circuit). These elements may be integrated into one piece of software or hardware, or may be dispersed into multiple pieces of software and hardware.

For example, the battery control unit 11 may be incorporated in a battery ECU (BMU: Battery Management Unit) that manages the battery 5. In addition, the running control unit 12 may be incorporated in a vehicle ECU (e.g., running control ECU exemplified by a HEV-ECU or a PHEV-ECU) that manages the power train of the vehicle 1. Further, the motor control unit 13 may be incorporated in a motor ECU (MCU: Motor Control Unit) that manages the motor 3. In addition, the engine control unit 14 may be incorporated in an engine ECU that manages the engine 2.

The battery control unit 11 manages the operating state of the battery 5 and calculates various parameters representing the operating state of the battery 5. The battery control unit 11 calculates a charge rate (SOC: State of Charge), a soundness (SOH: State of Health), an output-state (SOP: State of Power), and the like on the basis of information such as the voltage, the electric current, and the battery temperature of the battery 5. The information such as the voltage, the electric current, and the battery temperature of the battery 5 is detected by a voltage sensor, a current sensor, and a temperature sensor which are not illustrated.

The battery control unit 11 of the present embodiment calculates, as the output state described above, a "battery output" of the battery 5 and the "upper limit output" which is upper limit value (maximum value) of the battery output. The battery output means electric power (kW, kilowatt) drawn from the battery 5 to drive the motor 3 or various electrical components. The value of the battery output is calculated on the basis of the electric current and the voltage discharged from the battery 5. The upper limit output is the electric power (kW) corresponding to the rated output of the battery 5, and means the upper limit value of the battery output that can be drawn and used from the battery 5 at that time. The value of the upper limit output is set according to the operating state (e.g., charge rate, soundness, voltage, electric current, battery temperature) of the battery 5 and the running state (e.g., running mode, vehicle speed, outside air temperature, accelerator opening degree, brake opening degree) of the vehicle 1. The value of the upper limit output in the EV priority mode is set higher than the value of the upper limit output in the normal mode. Here, setting the value of the upper limit output in the EV priority mode to a "first upper limit value", and setting the value of the upper limit output in the normal mode to a "second upper limit value", the relationship "first upper limit value > second upper limit value" is satisfied (i.e. the above inequality holds true).

The running control unit 12 manages the running state of the vehicle 1 and calculates various parameters representing the running state of the vehicle 1. The running control unit 12 calculates a driver-demanded torque (torque corresponding to the driving force that the driver demand of the vehicle 1) based on information such as an accelerator opening degree, a brake opening degree, and a vehicle speed. Further, the running control unit 12 selects and sets one running mode from among the multiple running modes in accordance with the calculated driver-demanded torque, the calculated operating state (e.g., charge rate, soundness, voltage, electric current, and battery temperature) of the battery 5, and the calculated running state (e.g., vehicle speed, outside air temperature, accelerator opening degree, and brake opening degree) of the vehicle 1. Information on the accelerator opening degree and the brake opening degree is detected by an accelerator pedal sensor and a brake pedal sensor, or a brake fluid pressure sensor which are not illustrated. Information on the vehicle speed and the outside air temperature are detected by a vehicle speed sensor and an outside air temperature sensor which are not illustrated.

The running control unit 12 of the present embodiment determines whether or not to change the running mode to the hybrid running mode by determining a requirement (engine starting requirement) for starting the engine 2 during the EV running mode (i.e., when the motor 3 is operating but the engine 2 is not operating). The engine starting requirement determined here is different between for the EV priority mode and for the normal mode, and the engine starting requirement is set more strictly (less likely to be changed to the hybrid-running mode) in the EV priority mode than in the normal mode.

The engine starting requirement in the EV priority mode is listed below. Condition A is the only precondition, and Conditions B to F are optional conditions that are not essential. Condition G does not fall within the subject-matter for which protection is sought.

Condition A: a state where a battery output of the battery is a predetermined value or more continues for a predetermined time or more.

Condition B: the battery output reaches the first upper limit value.

Condition C: the driver-demanded torque is a first threshold value or more.

Condition D: the vehicle speed is a first speed or more.

Condition E: the accelerator opening degree is a first predetermined opening degree or more.

Condition F: the charge rate of the battery 5 is a first predetermined charge rate or less.

Condition G: the voltage of the battery 5 is a lower limit voltage or less.

The engine starting requirement in the normal mode is Condition H. Conditions I to M are optional conditions that are not essential.

Condition H: the battery output reaches the second upper limit value.

Condition I: the driver-demanded torque is a second threshold value or more.

Condition J: the vehicle speed is a second speed or more.

Condition K: the accelerator opening degree is a second predetermined opening degree or more.

Condition L: the charge rate of the battery 5 is a second predetermined charge rate or less.

Condition M: the voltage of the battery 5 is the lower limit voltage or less.

The lower limit voltage included in Condition G and Condition M is a voltage that is set in advance to allow a margin for the operation of the battery 5 for the purpose of control, and has a value slightly higher than a minimum voltage (a limit value of the battery 5) that can appropriately use the battery 5. Condition H is preferably set along with Condition B. Similarly, Condition I is preferably set along with Condition C, and Condition J is preferably set along with Condition D. Furthermore, Condition K is preferably set along with Condition E, Condition L is preferably set along with Condition F, and Condition M is preferably set along with Condition G. In any case, in EV priority mode, the engine starting requirement is generally less likely to be satisfied than in the normal mode.

For the values included in Condition A to Condition M, the preferable magnitude relationships are listed below.
· second upper limit value < predetermined value < first upper limit value
· second vehicle speed ≤ first vehicle speed
   (more preferably, second vehicle speed < first vehicle speed)
· second predetermined opening degree ≤ first predetermined opening degree
   (more preferably, second predetermined opening degree < first predetermined opening degree)
· first predetermined charge rate ≤ second predetermined charge rate
   (More preferably, the first predetermined charge rate < second predetermined charge rate)

The above predetermined valued may be a variable value set in accordance with the first upper limit value or the second upper limit value. In the latter case, the predetermined value may be products each obtained by multiplying the first upper limit value or the second upper limit value by a predetermined factor. Examples of setting a specific predetermined value are shown below.
· $predetermined value = {k}_{1} \times first upper limit value \left(where 0<{k}_{1}<1\right)$
· $predetermined value = {k}_{2} \times second upper limit value \left(where 1<{k}_{2}\right)$
-

| |
|---|
| · predetermined value = k₃ × first upper limit value + (1-k₃) × second upper limit value (where 0 < k₃ < 1) |

The predetermined time may be a fixed value (for example, several seconds to several tens of seconds) set in advance, or may be a variable value set in accordance with an operating state of the battery 5. For example, an estimated time starting from the time when the output of the battery 5 comes to be the predetermined value or more to the time when the battery voltage gradually declines to reach the lower limit voltage may be calculated, and the predetermined time may be set shorter than the estimated time. In addition, the predetermined time may be set in accordance with the operating state of the battery 5. For example, the predetermined time may be set to be shorter as the charge rate, the soundness, and/or the battery temperature of battery 5 are lower.

Some accelerator pedal may be provided with a detent (arresting structure) which temporarily increases depression resistance in front of the full stroke position when the driver depresses the accelerator pedal. The accelerator opening degree corresponding to the position of the detent is referred to as a "detent opening degree". The normal accelerator operation mainly uses a range having an accelerator opening degree smaller than the detent opening degree, and the engine starting requirement is set to be satisfied when the accelerator pedal is strongly depressed beyond the detent opening degree. For example, the first predetermined opening degree is set to an opening degree at least larger than the detent opening degree. On the other hand, the second predetermined opening degree may be an opening degree larger than the detent opening degree (that is, an opening degree exceeding the detent opening degree and less than the first predetermined opening degree), or may be an opening degree smaller than the detent opening degree.

The motor control unit 13 manages the operating state of the motor 3. Here, the operating state of the motor 3 is controlled such that a motor output suitable for the running mode set by the running control unit 12 is obtained. The operating state of the motor 3 can be controlled by adjusting the operation of a non-illustrated inverter interposed on a high voltage circuitry between the battery 5 and the motor 3. For example, in the EV running mode or the series running mode, the inverter is controlled such that the motor torque equivalent to the driver-demanded torque is generated in the allowable range of the battery output. In the parallel running mode, the inverter is controlled such that the sum of the engine torque and the motor torque comes to be an equivalent value to the driver-demanded torque. The driving torque of the vehicle 1 in the EV running mode has a magnitude corresponding to the output torque of the motor 3.

The engine control unit 14 manages the operating state of the engine 2. Here, the operating state of the engine 2 and non-illustrated accessories are controlled such that a motor output suitable for the running mode set by the running control unit 12 is obtained. The engine control unit 14 may be configured to control, if the generator 4 generates electric power by using the driving force of the engine 2, both the engine 2 and the generator 4.

The operating state of the engine 2 can be controlled by adjusting the operation of a non-illustrated fuel injection valve, a non-illustrated throttle valve, and the generator 4, for example. For example, in the engine running mode, the fuel injection valve, the throttle valve, and/or the like are controlled such that the engine torque equivalent to the driver-demanded torque is generated. The driving torque of the vehicle 1 in the engine running mode corresponds to the magnitude of the output torque of the engine 2.

Further, in the parallel running mode, the fuel injection valve, the throttle valve and/or the like is controlled such that the sum of the engine torque and the motor torque comes to be an equivalent value to the driver-demanded torque. The driving torque of the vehicle 1 in the parallel running mode corresponds to the magnitude of the sum of the output torque of the engine 2 and the output torque of the motor 3. On the other hand, in the series running mode, the fuel injection valve, the throttle valve, and/or the like are controlled such that the engine 2 continues to operate in an efficient operating range, and also the operating state of the generator 4 (non-illustrated inverter interposed on the high-voltage circuitry between the battery 5 and the generator 4) is controlled. The driving torque of the vehicle 1 in the series running mode has a magnitude corresponding to the output torque of the motor 3.

### 3. Flowchart

FIG. 2 is an example of a flow chart of the control related to determination of starting the engine 2. The control illustrated in this flow chart may be repeatedly executed in the control device 10 at a predetermined cycle under a state where at least motor 3 is operating but the engine 2 is stopped (for example, during the EV running mode). The control illustrated in this flow chart can be performed if the hybrid vehicle 1 has at least an EV running mode and a hybrid running mode but the vehicle 1 may have or may not have the EV priority mode switch 7 (i.e., the EV priority mode and the normal mode).

In Step A1, the battery control unit 11 calculates the upper limit output of the battery 5 based on the operating state of the battery 5 and the running state of the vehicle 1. In Step A2, the predetermined value related to the engine starting requirement is set on the basis of the upper limit output of the battery 5. The predetermined value is set smaller than at least the upper limit output calculated in Step A1. In the ensuing Step A3, determination is made as to whether the battery output of the battery 5 is the predetermined value or more and also whether or not this state continues for a predetermined time or more. If the result of this determination is positive, the control proceeds to Step A4, and the engine control unit 14 starts the engine 2. On the other hand, if the result of the determination in Step A3 is negative, the control in this cycle ends.

In the above-described control, even if the battery output is less than the upper limit output (even if Condition B or Condition H is not satisfied), the engine 2 is started when a long time has elapsed while the battery output is relatively high. In other words, the engine 2 can be started irrespective of whether or not each of Conditions C and I related to the driver-demanded torque or each of Conditions E and K related to the accelerator opening degree is satisfied. Accordingly, the fluctuation in the driving torque of the vehicle 1 immediately after the start of the engine 2 is small, which can enhance the running feeling.

In addition, the engine 2 can be started irrespective of whether or not each of Conditions D and J related to the vehicle speed is satisfied, so that the engine 2 may be utilized in a lower-speed running range as compared with conventional control. Furthermore, the engine 2 can be started irrespective of whether or not each of Conditions F and L related to the charge rate of the battery 5 or each of Conditions G and M related to the battery voltage is satisfied, which makes it possible to avoid shortage in charge rate or the voltage of the battery 5 immediately after the start of the engine 2.

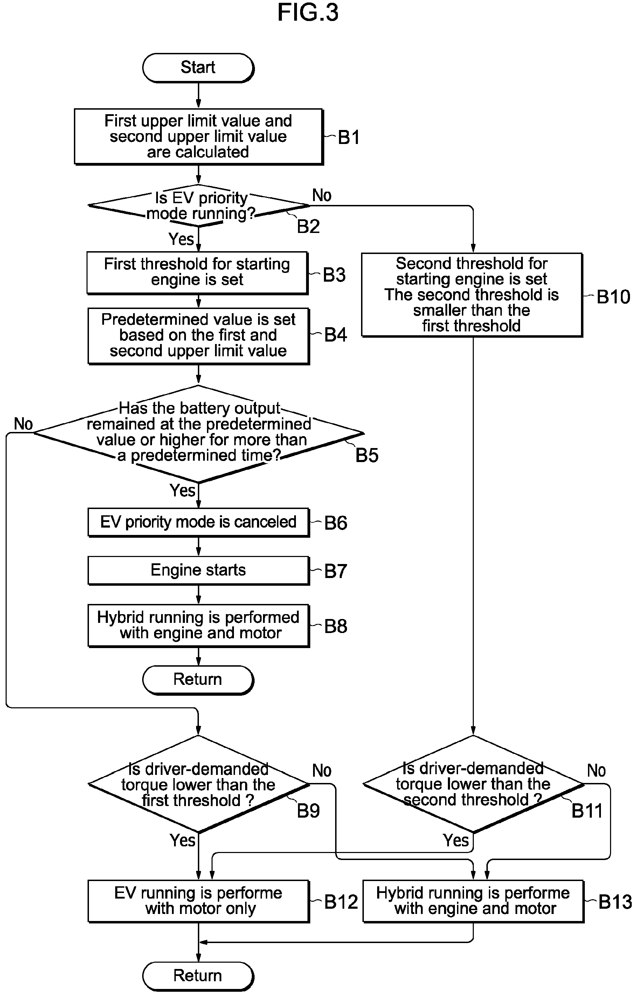

FIG. 3 is an example of a flow chart of the control related to determination of selecting a running mode and determination of starting the engine 2. The control illustrated in this flow chart may be repeatedly executed in the control device 10 at a predetermined cycle under a state where at least motor 3 is operating but the engine 2 is stopped (for example, during the EV running mode). The control in this flow chart eases the starting requirement for the engine 2 in the EV priority mode. Steps B1, B4, B5, B7 in FIG. 3 correspond to Steps A1-A4 in FIG. 2, respectively. The control illustrated in this flow chart may be executed in the hybrid vehicle 1 having the EV running mode and the hybrid running mode and also having the EV priority mode switch 7 (EV priority mode and the normal mode).

In Step B1, the first upper limit value and the second upper limit value are calculated on the basis of the operating state of the battery 5 and the running state of the vehicle 1. The first upper limit value is the value of the upper limit output in the EV priority mode, and the second upper limit value is the value of the upper limit output in the normal mode. In the following Step B2, determination is made as to whether or not the control state on the running mode is the EV priority mode on the basis of the operating position of the EV priority mode switch 7. If in the EV priority mode, the process proceeds to Step B3, and if not in the EV priority mode (if in the normal mode), the process proceeds to Step B10. The former route uses the first upper limit value as the upper limit output of the battery 5, and the latter route uses the second upper limit value as the upper limit output of the battery 5.

If the process proceeds to Step B3 (if in the EV priority mode), the first threshold of Condition C related to engine start is set. The first threshold is set according to, for example, the running state of the vehicle 1. In Step B4, the predetermined value is set on the basis of the first upper limit value and the second upper limit value calculated in Step B1. The predetermined value is set within a range of less than the first upper limit value and more than the second upper limit value, for example.

In Step B5, determination is made as to whether the battery output of the battery 5 is the predetermined value or more and also whether or not this state continues for a predetermined time or more. If the result of this determination is positive, the control proceeds to Step B6, and if the result of this determination is negative, the control proceeds to Step B9. In Step B6, the EV priority mode is canceled and the operating position of the EV priority mode switch 7 is automatically shifted to the off-position. In addition, in Step B7, the engine control unit 14 starts the engine 2.

After that, in Step B8, the running mode is switched from EV running mode to the hybrid running mode (series running mode or parallel running mode), and the control in this cycle ends. If the series running mode of the hybrid running mode is implemented, the control that causes the generator 4 to generate electric power using the driving force of the engine 2 is implemented and also the control of running using the driving force of the motor 3 is implemented. If the parallel running mode of the hybrid running mode is implemented, the control of running using the driving force of the engine 2 and the motor 3 is implemented. The operating state of the motor 3 is controlled by the motor control unit 13. The operating states of the engine 2 and the generator 4 are controlled by the engine control unit 14.

If the process proceeds from Step B5 to Step B9, determination is made as to whether or not a requirement except for the requirement determined in Step B5 among the engine starting requirements for the EV priority mode is satisfied. For example, determination is made as to whether the driver-demanded torque is less than the first threshold (negative determination of Condition C). If the result of this determination is positive (that is, if Condition C is not satisfied), the control proceeds to Step B12 to keep the EV running mode, and also the control in this cycle ends. On the other hand, if the result of the determination of Step B9 is negative (that is, if Condition C is satisfied), the control proceeds to Step B13 to switch the running mode from the EV running mode to the hybrid running mode (series running mode or parallel running mode), and the control in this cycle ends.

If the process proceeds from Step B2 to Step B10, the second threshold of Condition I related to engine start is set. The second threshold is set smaller than the first threshold, for example, according to the running state of the vehicle 1. In the subsequent Step B11, determination is made as to whether or not the engine starting requirement for the normal mode is satisfied. For example, determination is made as to whether the driver-demanded torque is less than the second threshold (negative determination of Condition I).

If the result of the determination in Step B11 is positive (that is, if Condition C is not satisfied), the control proceeds to Step B12 to keep the EV running mode, and also the control in this cycle ends. On the other hand, if the result of the determination in Step B11 is negative (that is, if Condition I is satisfied), the control proceeds to Step B13 to switch the running mode from the EV running mode to the hybrid running mode (series running mode or parallel running mode), and the control in this cycle ends.

### 4. Time chart

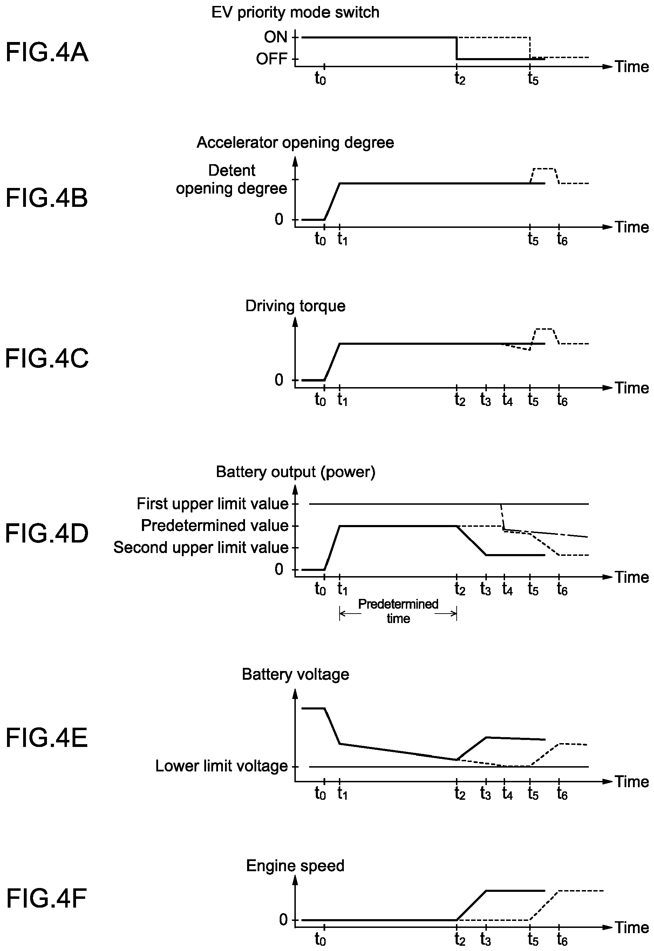

FIGs. 4A to 4F are time charts illustrating a control action of a case where the engine 2 is started when Condition A is satisfied in the EV priority mode and the running mode is shifted from the EV running mode to the series running mode. FIG. 4A shows the chronological change of the operating position in the EV priority mode switch 7, FIG. 4B shows the chronological change in the accelerator opening degree, and FIG. 4C shows the chronological change in the driving torque of the vehicle 1. In addition, FIG. 4D shows a chronological change in the battery power, FIG. 4E represents a chronological change in the battery voltage, and FIG. 4F represents a chronological change in the engine speed.

As indicated by a solid line in FIG. 4A, the operating position of the EV priority mode switch 7 before the time t₀ is the on-position, and the EV priority mode is set. Further, as indicated by a solid line in FIG. 4F, the engine speed before the time t₀ is zero, and the running mode is the EV running mode. As indicated by a solid line in FIG. 4B, it is assumed that the driver increases the accelerator opening degree at the time t₀ and makes an operation to keep the then accelerator opening degree at the time t₁.

With the increase in the accelerator opening degree, the outputting torque of the motor 3 increases, and as shown by the solid line in FIG. 4C, the driving torque of the vehicle 1 increases. At this time, as indicated by the solid line in FIG. 4D, the battery output of the battery 5 increases. The battery output increases from the time t₀ to the time t₁, and is kept at a value corresponding to the accelerator opening degree after the time t₁. The then battery output is regarded as the predetermined value related to Condition A. On the other hand, as indicated by the solid line in FIG. 4E, the battery voltage largely decreases from the time t₀ to the time t₁, and gradually decreases after the time t₁.

Condition A is satisfied when the battery output is maintained above the predetermined value from the time t₁ until the time t₂ after a predetermined time from the time t₁. Consequently, control for starting the engine 2 is executed, and the engine speed increases as indicated by the solid line in FIG. 4F. At this time, as indicated by the solid line in FIG. 4A, the operating position of the EV priority mode switch 7 is automatically shifted to the off-position. Further, after the engine speed reaches the predetermined speed at the time t₃, the predetermined speed is kept and the operating state of the engine 2 is stabilized. This also stabilizes the power generation state of the generator 4.

As indicated by the solid line in FIG. 4E, the battery voltage rises from the time t₂ to the time t₃, and gradually declines with a gentle gradient after the time t₃. Further, as indicated by a solid line in FIG. 4D, the battery output decreases from the time t₂ to the time t₃, and is kept at a substantially constant value after the time t₃. At this time, not only the battery output drawn from the battery 5 but also the generated electric power by the generator 4 are supplied to the motor 3. This makes it easier to obtain sufficiently large output torque of the motor 3, so that the drive torque would not lack. Therefore, as indicated by the solid line in FIG. 4C, the driving torque becomes substantially constant after the time t₃ as well as from the time t₂ to the time t₃, and the running feeling is enhanced.

The dashed lines in FIGS. 4A to 4F are graphs as a comparative example, and show the control action when the engine starting requirement does not include Condition A. If Condition A is absent, the EV running mode is continued after the time t₂. As a result, as indicated by the dashed line in FIG. 4E, the battery voltage still declines after the time t₂, and reaches the lower limit voltage at the time t₄. At this time, as indicated by the one-dotted dashed line in FIG. 4D, the upper limit value (first upper limit value) of the battery 5 can be greatly limited. In this case, as indicated by the dashed line in FIG. 4D, the battery output drops at the time t₄, and gradually decreases after the time t₄. Therefore, as indicated by the dashed line in FIG. 4C, it can be seen that the driving torque after the time t₄ decreases to make it impossible to obtain preferable running feeling.

Furthermore, it is assumed that the driver of the vehicle 1 notices a decrease in the driving torque and depresses the accelerator pedal at the time t₅. At this time, if the accelerator opening degree becomes the detent opening degree or more, the engine starting requirement is satisfied and control for starting the engine 2 is performed. As indicated by the dashed line in FIG. 4F, the engine speed increases after the time t₅. Further, after the engine speed reaches the predetermined engine speed at the time t₆, the predetermined engine speed is kept and the operating state of the engine 2 is stabilized. This also stabilizes the power generation state of the generator 4.

As indicated by the dashed line in FIG. 4E, the battery voltage rises from the time t₅ to the time t₆, gradually declines with a gentle gradient after the time t₆. Further, as indicated by the dashed line in FIG. 4D, the battery output decreases from the time t₅ to the time t₆, and is kept at a substantially constant value after the time t₆. On the other hand, since the accelerator opening degree from the time t₅ to the time t₆ is larger than before the time t₅, the driver-demanded torque comes to be large. Therefore, as indicated by the dashed line in FIG. 4C, the driving torque from the time t₅ to the time t₆ comes to be temporarily excessively large to make it impossible to obtain preferable running feeling.

### 5. Influence and Effect

(1) The hybrid vehicle 1 of the present embodiment includes: the engine 2 and the motor 3 that operate independently of each other; a battery 5 that stores electric power to drive the engine 2 and the motor 3; and a control device 10 that controls operating states of the engine 2 and the motor 3. The control device 10 starts the engine 2 when Condition A (a state where the battery output of the battery 5 is a predetermined value or more continues for a predetermined time or more) is satisfied when the motor 3 is operating but the engine 2 is operating. As described above, it is possible to suppress fluctuation of the driving torque of the vehicle 1 by performing control that starts the engine 2 if Condition A is satisfied when the motor 3 is operating but the engine 2 is not operating, and can consequently enhance the running feeling. For example, in the vehicle 1 that uses Condition H as the engine starting requirement, the engine 2 can be started with sufficient lead time before the battery output reaches the second upper limit value.

In addition, in the vehicle 1 that uses "strongly depressing the accelerator pedal beyond the detent opening degree" as one of the engine starting requirements, the engine 2 can be started even if the driver does not strongly depressed the accelerator pedal very much. Thereby, excessive increase in the driving torque at the start of the engine 2 can be avoided and consequently the usability of the vehicle 1 can be enhanced. As described above, the hybrid vehicle 1 of the present embodiment can enhance the running feeling and the usability (user-friendliness, operability).

(2) The hybrid vehicle 1 has the EV priority mode and the normal mode. In the EV priority mode, the requirement for starting the engine 2 when the motor 3 is operating but the engine 2 is not operating is set more strictly in contrast to the normal mode. In other words, the engine starting requirement for the normal mode is set more loosely in contrast to the EV priority mode. In addition, the predetermined value included in Condition A is less than the first upper limit value and larger than the second upper limit value. The first upper limit value is an upper limit value of the battery output in the EV priority mode, and the second upper limit value is the upper limit value of the battery output in the normal mode.

In addition, if Condition A is satisfied when the motor 3 is operating but the engine 2 is not operating, the control device 10 carries out control that starts the engine 2. By setting such engine starting requirement, the engine starting requirement is made stricter than in the normal mode, while being made easier as compared with the typical EV priority mode. Therefore, the starting timing of the engine 2 when the vehicle is running with high load on the motor 3 can be advanced while maintaining EV running state as long as possible, and the running feeling can be enhanced by suppressing the torque fluctuation of the vehicle 1.

(3) The predetermined time included in Condition A may be set shorter than a period starting from time when the battery output comes to be the predetermined value or more to time when a voltage of the battery 5 declines to reach the lower limit voltage. Setting the engine starting requirement as the above can start the engine 2 before the battery voltage excessively declines and can suppress the torque fluctuation of the vehicle 1 to enhance the running feeling.

### 6. Miscellaneous

The foregoing embodiment is illustrative only and is not intended to preclude the application of various modifications and techniques falling within the subject-matter of the appended claims. Each configuration of the present embodiment can be variously modified and implemented without departing from the subject-matter of the appended claims. Also, the configuration can be selected or omitted according to the requirement or can be appropriately combined. For example, although the above vehicle 1 is provided with the EV priority mode switch 7, the EV priority mode switch 7 can be omitted. Alternatively, the EV priority mode and the normal mode may be automatically set according to known requirement.

### [Industrial Applicability]

The present invention is applicable to industries of producing hybrid vehicles and industries of producing control devices mounted on hybrid vehicles.

### [Description of Reference Signs]

1: vehicle (hybrid vehicle)
2: engine
3: motor
4: generator
5: battery
6: clutch
7: EV priority mode switch
10: control device
11: battery control unit
12: running control unit
13: motor control unit
14: engine control unit

## Claims

1. A hybrid vehicle (1) comprising:
an engine (2) and a motor (3) that operate independently of each other;
a battery (5) that stores electric power to drive the engine (2) and the motor (3); and
a control device (10) that controls operating states of the engine (2) and the motor (3), wherein
if a condition A is satisfied when the motor (3) is operating but the engine (2) is not operating, the control device (10) starts the engine (2),
the condition A is that a state where a battery output of the battery (5) is a predetermined value or more continues for a predetermined time or more,
the hybrid vehicle (1) has an EV priority mode and a normal mode, each of the EV priority mode and the normal mode has a requirement for starting the engine (2) when the motor (3) is operating but the engine (2) is not operating,
the requirement in the EV priority mode is set more strictly in contrast to the normal mode, and the requirement in the normal mode is set more loosely in contrast to the EV priority mode,
the hybrid vehicle being **characterized in that**
the predetermined value is less than a first upper limit value and more than a second upper limit value,
the first upper limit value is an upper limit value of the battery output in the EV priority mode,
the second upper limit value is an upper limit value of the battery output in the normal mode,
the control device (10) starts the engine (2) if the condition A is satisfied when the motor (3) is operating but the engine (2) is not operating in the EV priority mode.

2. The hybrid vehicle (1) according to claim 1, wherein
the predetermined time is set shorter than a period starting from time when the battery output comes to be the predetermined value or more to time when a voltage of the battery (5) declines to reach a lower limit voltage.

## Patentansprüche

1. Hybridfahrzeug (1) aufweisend:
einen Verbrennungsmotor (2) und einen Elektromotor (3), die unabhängig voneinander arbeiten;
eine Batterie (5), die elektrische Energie speichert, um den Verbrennungsmotor (2) und den Elektromotor (3) anzutreiben; und
eine Steuervorrichtung (10), die Betriebszustände des Verbrennungsmotors (2) und des Elektromotors (3) steuert, wobei
wenn der Elektromotor (3) in Betrieb ist, aber der Verbrennungsmotor (2) nicht in Betrieb ist, die Steuervorrichtung (10) den Verbrennungsmotor (2) startet, falls eine Bedingung A erfüllt ist,
die Bedingung A ist, dass ein Zustand, in dem eine Batterieleistung der Batterie (5) ein vorgegebener Wert oder mehr ist, sich eine vorgegebene Zeitdauer oder länger fortsetzt,
das Hybridfahrzeug (1) einen EV-Prioritätsmodus und einen normalen Modus aufweist, wobei, wenn der Elektromotor (3) in Betrieb ist, aber der Verbrennungsmotor (2) nicht in Betrieb ist, sowohl der EV-Prioritätsmodus als auch der normale Modus eine erforderliche Voraussetzung zum Starten des Verbrennungsmotors (2) aufweisen,
die erforderliche Voraussetzung in dem EV-Prioritätsmodus strenger festgesetzt ist im Gegensatz zu dem normalen Modus, und die erforderliche Voraussetzung in dem normalen Modus lockerer festgesetzt ist im Gegensatz zu dem EV-Prioritätsmodus,
wobei das Hybridfahrzeug **dadurch gekennzeichnet ist, dass**
der vorgegebene Wert kleiner als ein erster oberer Grenzwert und größer als ein zweiter oberer Grenzwert ist,
der erste obere Grenzwert ein oberer Grenzwert der Batterieleistung in dem EV-Prioritätsmodus ist,
der zweite obere Grenzwert ein oberer Grenzwert der Batterieleistung in dem normalen Modus ist,
wenn in dem EV-Prioritätsmodus der Elektromotor (3) in Betrieb ist, aber der Verbrennungsmotor (2) nicht in Betrieb ist, die Steuervorrichtung (10) den Verbrennungsmotor (2) startet, falls die Bedingung A erfüllt ist.

2. Hybridfahrzeug (1) nach Anspruch 1, wobei
die vorgegebene Zeitdauer kürzer festgesetzt ist als eine Dauer, beginnend ab dem Zeitpunkt, an dem die Batterieleistung den vorgegebenen Wert oder mehr erreicht hat, zu einem Zeitpunkt, an dem eine Spannung der Batterie (5) bis auf eine untere Grenzspannung gesunken ist.

## Revendications

1. Véhicule hybride (1) comprenant:
un moteur thermique (2) et un moteur électrique (3) qui fonctionnent indépendamment l'un de l'autre;
une batterie (5) qui stocke de l'énergie électrique pour entraîner le moteur thermique (2) et le moteur électrique (3); et
un dispositif de commande (10) qui commande les états de fonctionnement du moteur thermique (2) et du moteur électrique (3), dans lequel
si une condition A est satisfaite lorsque le moteur électrique (3) fonctionne mais que le moteur thermique (2) ne fonctionne pas, le dispositif de commande (10) démarre le moteur thermique (2),
la condition A est qu'un état dans lequel une sortie de batterie de la batterie (5) est une valeur prédéterminée ou plus continue pendant une durée prédéterminée ou plus,
le véhicule hybride (1) a un mode de priorité EV et un mode normal, chacun du mode de priorité EV et du mode normal a une exigence pour démarrer le moteur thermique (2) lorsque le moteur électrique (3) fonctionne mais que le moteur thermique (2) ne fonctionne pas,
l'exigence dans le mode de priorité EV est fixée de manière plus stricte contrairement au mode normal, et l'exigence dans le mode normal est fixée de manière plus lâche contrairement au mode de priorité EV,
le véhicule hybride étant **caractérisé en ce que**
la valeur prédéterminée est inférieure à une première valeur limite supérieure et supérieure à une seconde valeur limite supérieure,
la première valeur limite supérieure est une valeur limite supérieure de la sortie de batterie dans le mode de priorité EV,
la seconde valeur limite supérieure est une valeur limite supérieure de la sortie de batterie dans le mode normal,
le dispositif de commande (10) démarre le moteur thermique (2) si la condition A est satisfaite lorsque le moteur électrique (3) fonctionne mais que le moteur thermique (2) ne fonctionne pas dans le mode de priorité EV.

2. Véhicule hybride (1) selon la revendication 1, dans lequel
la durée prédéterminée est fixée plus courte qu'une période commençant au moment où la sortie de batterie atteint la valeur prédéterminée ou plus jusqu'au moment où une tension de la batterie (5) baisse pour atteindre une tension limite inférieure.
